# EUROPEAN PATENT SPECIFICATION

(11) **EP 4 327 507 B1**
(45) Date of publication and mention of the grant of the patent: **25.11.2026**
(21) Application number: 22724482.9
(22) Date of filing: 22.04.2022
(51) Int. Cl.: H04L 9/32

(54) **METHOD AND SYSTEM FOR SECURE CONFIDENTIAL DIGITAL CONTENT EXCHANGE**
VERFAHREN UND SYSTEM ZUM SICHEREN AUSTAUSCH VERTRAULICHER DIGITALER INHALTE
PROCÉDÉ ET SYSTÈME D'ÉCHANGE SÉCURISÉ DE CONTENU NUMÉRIQUE CONFIDENTIEL

(30) Priority: 22.04.2021 IT 202100010241
(43) Date of publication of application: 28.02.2024
(73) Proprietor: Alosys Communications S.r.l., 00198 Rome (IT)
(72) Inventor: PIGNATELLI, Eugenio, 00198 Rome (IT); PIGNATELLI, Giovanni Battista, 00198 Rome (IT)
(74) Representative: IP Sextant s.r.l.
(86) International application number: PCT/IB2022/053773
(87) International publication number: WO 2022/224213

(56) References cited:
- US-A1- 2005 021 984
- US-A1- 2014 032 924
- US-A1- 2018 034 813

## Description

The present invention relates to a computer implemented method of exchanging digital contents which allows, in a secure, confidential, simple, efficient and reliable way, to ensure that one or more digital contents sent by a sender are accessible only to one or more recipients selected by the sender ensuring their integrity and authenticity, as well as non-repudiation, since the personal identity of sender and recipients is involved in the techniques of encryption and decryption of the digital contents performed by the method; also, in some embodiments the computer implemented method according to the invention allows in a secure, simple, efficient and reliable way to ensure that accessibility is also reserved for contents stored in centralised environments, such as servers or cloud, which are uniquely controllable by the sender.

The present invention also relates to a digital content exchange system configured to perform such method and a computer program configured to perform such method.

In the following of the present description and in the claims, computer implemented method means a method that can be executed by any device provided with one or more processing units, such as for example smartphones, mobile phones, tablets, laptops, personal computers (PCs) and servers. Moreover, in the following of the present description and in the claims, digital content means any computer content such as for example text, video, image, photograph, spreadsheet, presentation.

It is known that security in the digital content exchange and access is currently extremely relevant.

By way of example, the digital contents exchanged among the members of an organization and the new services which can be provided in a smart city, as well as in smartworking platforms or in the cloud, imply a criticality in the secure management of confidential communications exchanged among various sources, as well as in the security of the data content stored in a centralised environment such as the cloud and/or one or more centralized servers due to the fact that the system administrator can decode their content. In fact, data communication infrastructures are subject to risks of violation by third parties not authorised to transmit and/or receive and/or access the data exchanged, creating significant cybersecurity and security problems.

In the prior art, some solutions to the data security problem have been developed, often also based on biometric data of the subjects authorised to transmit, receive and access the exchanged data, especially on proprietary and/or specialised devices. By way of example, some of these prior art solutions are disclosed in documents US 2005/021984 A1, US 2018/034813 A1, US 2014/032924 A1, GB 2584455 A, KR 20100123032 A, WO 2010/137047 A1, IT 102014902319728 and US 10432401 B2.

However, such solutions suffer from some drawbacks.

In fact, the prior art solutions are generally complex, do not guarantee security of communications, may be not compliant with privacy regulations, and require specific devices which are difficult to update and are also affected by hardware obsolescence.

The object of the present invention is therefore to allow in a secure, confidential, simple, efficient and reliable way, the exchange and possibly the storage of digital contents ensuring their integrity and authenticity, as well as non-repudiation, also allowing to follow the technological evolution of the devices used through remote updates.

It is specific subject-matter of the present invention a computer implemented method of exchanging digital contents among a plurality of users registered in a sharing association, wherein each user of said sharing association is associated to at least one device provided with one or more processing units and with one or more acquiring devices configured to acquire at least one biometric trait, wherein the computer implemented method comprises the following steps:
A. on said at least one device of each user of said sharing association, associating and storing: a personal univocal code of the user under consideration generated by said at least one device of the user under consideration, wherein said personal univocal code of the user under consideration depends on one or more biometric features of identification of the user under consideration deriving from at least one biometric trait of the user under consideration acquired by said one or more acquiring devices, and a public key and a private key of a asymmetric cryptography algorithm corresponding to the user under consideration, wherein the public keys of all the users of said sharing association are accessible by or stored in said at least one device of each user of said sharing association;
B. on at least one device of a sender user *M* of said sharing association, selecting at least one digital content that forms a transmission payload and further selecting one or more recipient users *Dᵢ* of said sharing association with whom to share said transmission payload;
C. on said at least one device of the sender user *M,* encrypting said at least one digital content using as a cryptographic key said personal univocal code of the sender user *M,* obtaining an encrypted payload;
D. on said at least one device of the sender user *M,* for each one of said one or more recipient users *Dᵢ*, encoding said personal univocal code of the sender user *M* through said asymmetric cryptography algorithm by means of said public key of the recipient user *Dᵢ*, obtaining a respective encoded personal univocal code of the sender user *M*;
E. on said at least one device of the sender user *M,* building an encrypted file comprising the encrypted payload and a matrix binary file, that includes said encoded personal univocal code of the sender user *M* for each one of said one or more recipient users *Dᵢ*;
F. sending the encrypted file from said at least one device of the sender user *M* to said at least one device of each one of said one or more recipient users *Dᵢ*; and
G. on said at least one device of each one of said one or more recipient users *Dᵢ* receiving the encrypted file,
   a) decoding said encoded personal univocal code of the sender user *M* through said asymmetric cryptography algorithm by means of said private key of the recipient user *Dᵢ*, and
   b) decrypting the encrypted payload using as a cryptographic key said personal univocal code of the sender user *M,* obtaining said at least one digital content.

According to another aspect of the invention, said personal univocal code of each user of said sharing association can further depend on one or more user's identification personal data, optionally selected from the group comprising name, surname, email, fiscal code, VAT number, IMEI code, SSAID code and SIM ICCID code, and/or on a PIN code.

According to a further aspect of the invention, said at least one biometric trait can be selected from the group comprising a fingerprint, a face image, a voice print, an image of an iris, a three-dimensional shape of a hand, and an image of a retina.

According to an additional aspect of the invention, in step F, sending the encrypted file from said at least one device of the sender user *M* to said at least one device of each one of said one or more recipient users *Dᵢ* can occur by means of an intermediate storage of the encrypted file on at least one storage server, thereby said at least one device of a sender user *M* stores the encrypted file on said at least one storage server and said at least one device of each one of said one or more recipient users *Dᵢ* accesses said at least one storage server and downloads the encrypted file.

According to another aspect of the invention, in step F, sending the encrypted file from said at least one device of the sender user *M* can be conditioned on a biometric recognition of the sender user *M.*

According to a further aspect of the invention, said at least one device can be selected from the group comprising a smartphone, a tablet, a laptop, and a PC.

According to an additional aspect of the invention, in step A, a respective asymmetric cryptography algorithm accessible from or stored in said at least one device of each user of said sharing association can be associated to each user of said sharing association.

According to another aspect of the invention, said at least one device of the sender user *M* on which step B selects said at least one digital content can be a first device of the sender user *M,* optionally a PC, provided with a display, and said at least one device of the sender user *M* on which steps C, D, E, and F are executed can be a second device of the sender user *M,* optionally a smartphone, provided with a camera, wherein the computer implemented method further comprises, before step B, the following step:
H. displaying an identification code on said display of said first device of the sender user *M,* optionally a QRCODE, and acquiring said identification code through said camera of said second device of the sender user *M* to establish a connection on an encrypted communication channel between said first device of the sender user *M* and said second device of the sender user *M,*
wherein, in step B, said at least one digital content is transmitted from said first device of the sender user *M* to said second device of the sender user *M.*

It is also specific subject-matter of the present invention a system of digital contents exchange configured to exchange digital contents among a plurality of users registered in a sharing association, wherein each user of said sharing association is associated to at least one device provided with one or more processing units and with one or more acquiring devices configured to acquire at least one biometric trait, wherein said at least one device of each user of said sharing association is configured to execute the computer implemented method of exchanging digital contents among a plurality of users registered in a sharing association as previously described.

According to a further aspect of the invention, the system can further comprise at least one central processing device, optionally comprising or consisting in at least one server and/or at least one PC and/or at least one portable device, that is accessible, optionally via web, by a system administrator, and that records information related to one or more sharing associations of users and one or more logs of events related to transmissions of digital contents among users of a sharing association.

According to an additional aspect of the invention, the system can further comprise at least one storage server.

It is another specific subject-matter of the present invention a set of one or more computer programs comprising instructions that, when executed by one or more processing units of a user's device, cause said user's device to execute the computer implemented method of exchanging digital contents among a plurality of users registered in a sharing association as previously described.

It is further specific subject-matter of the present invention a set of one or more computer-readable media having stored thereon the set of one or more computer programs as just described.

The computer implemented method according to the invention advantageously uses a smartphone (or other conventional portable device) as an aid for the encryption of the digital contents to be exchanged and the detection of data, including biometric data, of the smartphone user participating in the digital content exchange. Optionally, the computer implemented method according to the invention can also use the IMEI code (unique identifier of the smartphone assigned by the phone manufacturer) and/or the SSAID code (unique identifier assigned to an Android device) and the ICCID code of the SIM card (i.e. the unique identifier of the SIM card) installed in the smartphone or a Pin code contained in a secret SMS automatically generated by a web console in the cloud, or in PAAS or SAAS) for the encryption of the digital contents and the control of the authorisation of the user using the smartphone. In particular, the user personal data and/or the user biometric data and/or at least one PIN chosen by the user and/or at least one univocal identifier of the smartphone (e.g. the IMEI code and/or the SSAID code) and/or at least one univocal identifier associated with the telephone service (e.g. the ICCID code of the SIM card, or PIN contained in a secret SMS) are used by the computer implemented method according to the invention to allow the secure and confidential sharing of digital contents.

The computer implemented method according to the invention does not require additional apparatuses or devices, besides the smartphone (or other portable device, such as a tablet), to guarantee the secure and confidential sending of digital contents.

The computer implemented method according to the invention allows the transmission of digital contents also from a PC (or a server), so as to be capable to send contents present on the PC (or the server) itself: the security and confidentiality of digital contents is guaranteed by the encryption advantageously carried out through a smartphone (or other portable device).

The advantages offered by the computer implemented method according to the invention are numerous.

First of all, the control of encryption is entirely managed uniquely locally by the user who sends the digital contents and by the user who receives them, thereby no infrastructure is required for data transfer. In other words, the computer implemented method according to the invention implements a specific one-to-one or one-to-many end-to-end transmission technique, and possibly a storage on centralised environments such as cloud or server in SAAS or PAAS.

Also, the computer implemented method according to the invention does not require centralised access points, potentially vulnerable, and does not have public keys to be exchanged centrally. In other words, no data are transits centrally (and in any case non-encrypted digital contents do not transit), but at most only logs of events related to the transmission of digital contents (e.g., date and time of transmission, type of digital contents, such as data or video, and size of the transmitted digital contents).

Furthermore, in the computer implemented method according to the invention, the control of the decryption by the recipient of the digital contents is bound to the sender's will to have the digital contents decrypted only by the recipients who are authorized to do so by the sender. In particular, in the case of the cloud, only the editor can decrypt what is stored in the cloud by the editor himself/herself.

In other words, the computer implemented method of exchanging digital contents allows, in a secure, confidential, simple, efficient and reliable way, to ensure that one or more digital contents sent by a sender are accessible exclusively by one or more recipients selected by the sender ensuring its integrity and authenticity.

The present invention will be now described, for illustrative but not limiting purposes, according to its preferred embodiments, with particular reference to the Figures of the attached drawings, in which:
Figure 1 schematically shows a flow graph of the procedure for registering and associating a user of a preferred embodiment of the computer implemented method of exchanging digital contents according to the invention;
Figure 2 schematically shows a flow graph of a first procedure of digital content transmission of the preferred embodiment of the computer implemented method of exchanging digital contents according to the invention (Fig. 2a) and a schematic representation of the data processed in the various steps of such procedure (Fig. 2b); and
Figure 3 schematically shows a flow graph of a second procedure of digital content transmission of the preferred embodiment of the computer implemented method of exchanging digital contents according to the invention.

In the Figures identical reference numerals will be used for alike elements.

As previously stated, the computer implemented method of exchanging digital contents, and the related system, according to the invention, advantageously uses a smartphone (or other conventional portable device) as an aid for the encryption of the digital contents to be exchanged and the detection of the data, including biometric data, of the smartphone user participating in the exchange of digital contents. In particular, the computer implemented method according to the invention does not require additional apparatuses or devices, besides the smartphone (or other portable device, such as a tablet), to guarantee the secure and confidential sending of digital contents. Optionally, a central web console, accessible by an administrator of the system according to the invention, maintains the details of associations among users and a log of events related to transmissions of digital contents, but not necessarily the same non-encrypted digital contents, in compliance with the privacy and current legislation.

A preferred embodiment of the computer implemented method of exchanging digital contents according to the invention comprises:
- a procedure of user registration and association, through which a user is uniquely identified and registered by means of his/her smartphone and chooses to associate with a plurality, or community, of already registered users;
- a first procedure of transmission by an already registered sender user of digital contents present on his/her smartphone by means of the same smartphone to one or more recipient users of his/her community; and
- a second procedure of transmission by an already registered sender user of digital contents present on a different device, such as for instance a PC, by means of a connection of the PC (or other device) to his/her smartphone and the use of an identification code, advantageously a QRCODE, to one or more recipient users of his/her community.

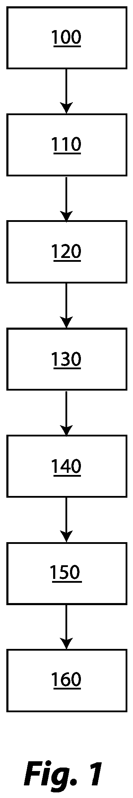

With reference to Figure 1, it can be observed that the procedure of user registration and association preliminarily comprises a first step 100, wherein the user downloads the app comprising instructions which, when executed by at least one processing unit (e.g., one or more microprocessors) of the smartphone, cause the smartphone to execute the computer implemented method of exchanging digital contents according to the invention, and a second step 110 wherein the user starts the app on the smartphone.

Subsequently, the registration and association procedure comprises a third step 120 wherein the user registers in the system according to the invention by entering in the app some user personal identification data (e.g., one or more of the following data: name, surname, email, mobile number, social security number and possibly VAT number), while other user identification data can be entered automatically by the method that acquires them through the operating system of the smartphone (such as IMEI code, SSAID code and ICCID code of the SIM or PIN contained for example in a secret SMS); such user identification data form a first level of identification and security.

Then, in a fourth step 130 of the registration and association procedure, the user selects and enters in the app his/her own PIN code (personal identification code or contained in a secret SMS generated by a centralised web console in the cloud, in PAAS or in SAAS) that forms a second level of identification and security. Advantageously, this PIN code can be provided asynchronously at the registration directly with email or SMS message from at least one central processing device, optionally a server, to which the smartphone connects for the registration and association procedure.

Subsequently, in a fifth step 140 of the registration and association procedure, the user makes the app acquire, by means of the smartphone devices (namely camera and/or microphone), at least one of his/her own biometric traits, e.g. selected from the group comprising a fingerprint, a face image, a voice print, an iris image, from which the app derives one or more user identification biometric features which form a third level of identification and security. It must be noted that in other embodiments of the computer implemented method, and related system, according to the invention, the smartphone can be provided with devices configured to also acquire biometric traits different from those described, such as for example a three-dimensional form of a hand or a retina image, still remaining within the scope of protection of the present invention; to this end, the smartphone could be connected to external acquisition devices and/or could receive one or more user identification biometric features deriving from such acquisitions made by external devices.

Then, in a sixth step 150 of the registration and association procedure, the app uses the user personal identification data and the PIN code entered by the user or contained in a secret SMS and said one or more user identification biometric features, deriving from said at least one biometric trait acquired by the app, to generate a univocal personal code of the user, dependent on such data, which the app then uses for the exchange of digital contents. By way of example, and not by way of limitation, said personal univocal code of the user can be obtained by means of a Boolean operation (e.g., an addition or a subtraction) made on the strings representing the user personal identification data, the PIN code and said one or more biometric features of identification of the user, or by means of an interlacing of portions of such strings with each other, or through any other conventional technique such as using one or more of such strings as seeds of random generation algorithms and possibly carry out Boolean operations or interlacing using randomly generated strings.

It should be noted that other embodiments of the computer implemented method, and related system, according to the invention, can generate said personal univocal code of the user on the basis of only said one or more biometric features of identification of the user, possibly in combination with the user personal identification data or with the PIN code entered by the user or contained in a secret SMS, still remaining within the scope of protection of the present invention.

Finally, in a seventh step 160 of the registration and association procedure, the user selects among the already registered users those with whom he/she wishes to exchange digital contents, thus creating his/her own sharing community. Alternatively or in combination with such selection, the user selects an association of users (who form a community) already registered in the system according to the invention and that is proposed to him by the app; in the case where the user is part of an organisation, he/she is automatically inserted by the app into the organisation community.

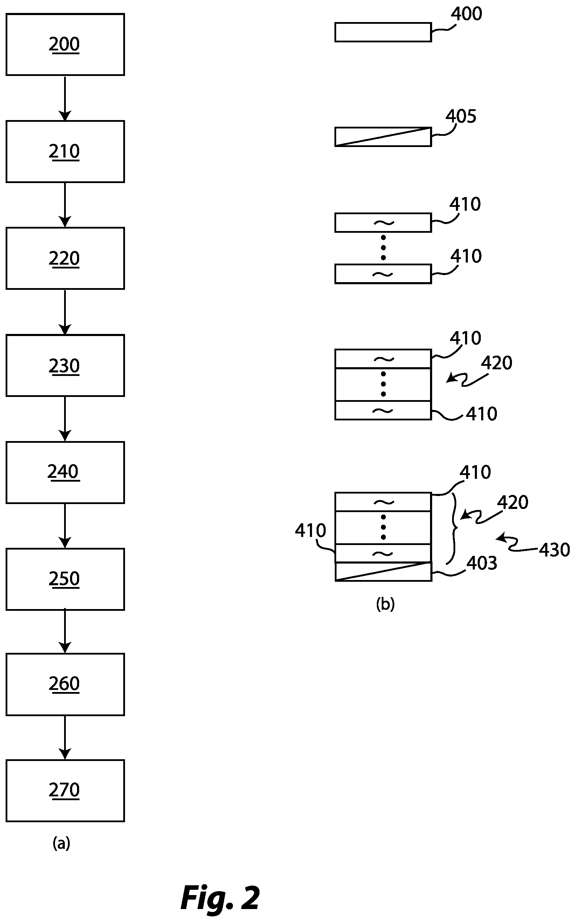

With reference to Figure 2, it can be observed that the first transmission procedure comprises a first step 200 wherein the sender user *M* selects, through the app, at least one digital content 400, e.g. one or more files, present on his/her smartphone, wherein said at least one digital content 400 forms the so-called payload of the transmission, and further selects one or more recipient users *Dᵢ* of his/her community with whom said payload is to be shared.

In a second step 210 of the first transmission procedure, said at least one payload digital content 400 is encrypted by using as cryptographic key said personal univocal code of the sender user M, thus obtaining an encrypted payload 405. In particular, for the encryption of said at least one payload digital content 400, any single-key cryptographic algorithm can be used.

Subsequently, in a third step 220 of the first transmission procedure, for each one of said one or more recipient users *Dᵢ*, said personal univocal code of the sender user *M,* operating as payload cryptographic key, is encoded through an asymmetric cryptography algorithm by using a public key of the recipient user *Dᵢ*, obtaining a respective encoded personal univocal code 410. In particular, any asymmetric cryptography algorithm can be used for the encryption of said personal univocal code of the sender user *M*; optionally, a respective asymmetric cryptography algorithm can be associated to each user when acting as a recipient user.

Then, in a fourth step 230 of the first transmission procedure, a matrix binary file 420 is built that contains a row for each one of said one or more recipient users *Dᵢ*, containing said encrypted personal univocal code 410 of the sender user *M*, that is encoded through the public key of the recipient user *Dᵢ*.

Subsequently, in a fifth step 240, the encrypted payload 405 is appended to the matrix binary file 420 obtained in the fourth step 230, obtaining an encrypted file 430 to be transmitted. Advantageously, the encrypted file 430 can be provided with some heading data, which for example declare the number of lines corresponding to said one or more recipient users *Dᵢ*.

Then, in a sixth step 250, the sender user *M* selects the application, among those available on the smartphone, with which the encrypted file 430 is to be sent to said one or more recipient users *Dᵢ*.

Subsequently, in a seventh step 260, the app requests the sender user *M* to carry out a biometric recognition to authorise the sending, and the encrypted file 430 is sent upon a positive biometric recognition. Other embodiments of the computer implemented method according to the invention may not have such a seventh step 260, so that the encrypted file 430 is directly sent at the end of the sixth step 250.

Finally, in an eighth step 270, the app residing on the smartphone (or other portable device or PC or server) of each one of said one or more recipient users *Dᵢ* performs some processing activities on the encrypted file 430 received by the application that the sender user *M* has selected to send the encrypted file 430, namely:
- searching for the row containing said personal univocal code 410 of the sender user *M* encoded through the public key of the recipient user *Dᵢ*,
- decoding said encoded personal univocal code 410 of the sender user *M* by using the private key of the recipient user *Dᵢ* (through the same asymmetric cryptography algorithm used to encode said personal univocal code of the sender user *M*),
- decrypting said encrypted payload 405 by using said personal univocal code of the sender user *M* (through the same single-key encryption algorithm used to encrypt said at least one payload digital content), thus obtaining at least one payload digital content 400 and thus making it available to the recipient user *Dᵢ*.

In particular, the app that is on the smartphone (or other portable device or PC or server) of each of said one or more recipient users *Dᵢ* can make the search for the row containing said encoded personal univocal code 410 of the sender user *M* through the public key of the recipient user *Dᵢ* in several ways. By way of example, and not by way of limitation, the univocal personal code of the sender user *M* could be preceded by a known prefix of few bits (for example included in the possible *heading* of the encrypted file 430) and the app of each one of said one or more recipient users *Dᵢ* can decode all the rows containing said encoded personal univocal code 410 of the sender user *M,* comparing the obtained prefix of bits with the expected one (i.e. with the known prefix of bits) until such bit prefix is equal to the known bit prefix, whereby the app recognises that the decoded row contains said personal univocal code of the sender user *M* correctly decoded. Alternatively, the rows containing the encoded personal univocal code 410 of the sender user *M* can be inserted at the head of the encrypted file only after the sender user *M* has given the command to send the encrypted file 430 in step 250 (or after the app has biometrically recognized the sender user *M* in step 260) in the same order as the ordered list of said one or more recipient users *Dᵢ* indicated in the sending application selected in step 250, whereby the app of each one of said one or more recipient users *Dᵢ* knows which row corresponds to the recipient user *Dᵢ*.

It must be noted that other embodiments of the computer implemented method according to the invention can provide that the encrypted file 430 is sent (with the application selected in the sixth step 250, possibly upon a positive biometric recognition carried out in the seventh step 260) by the sender user *M* to said one or more recipient users *Dᵢ* by means of an intermediate storage of the encrypted file 430 on at least one storage server. In other words, the sender user *M* stores the encrypted file 430 on said at least one storage server, and each one of said one or more recipient users *Dᵢ* accesses said at least one storage server to download the encrypted file 430 and execute the eighth step 270 on it. Such sending mode by means of said at least one storage server is particularly advantageous in case of online voting and data sharing among members of a research group.

It must be also noted that the procedure shown in Figure 1 for registering and associating a user and the first transmission procedure shown in Figure 2 can be executed by any device provided with a processing unit, such as for instance portable devices (such as tablets and laptops), PCs and servers. In particular, as regards the procedure shown in Figure 1 for registering and associating a user, this can be executed by any device provided with a processing unit allowing the acquisition and management of biometric data.

Also, the secure and confidential digital content transmission through the computer implemented method of exchanging digital contents according to the invention can also take place by means of a second procedure of transmission based on a connection between the smartphone of the sender user *M* in which the (main) app of the method according to the invention is installed, that performs the encryption, and a PC in which an auxiliary app is installed that communicates with the (main) app installed in the smartphone, in which PC said at least one digital content that the sending user *M* wishes to send to one or more recipient users *Dᵢ* is stored.

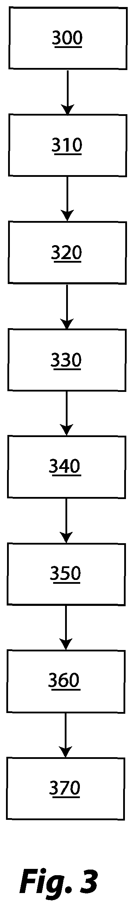

With reference to Figure 3, it can be observed that the second transmission procedure preliminarily comprises a first step 300 wherein the user downloads the auxiliary app through which he/she makes the registration and association as described in steps 120-160 described with reference to Figure 1, wherein step 120 is executed on the PC while steps 130-160 are executed on the smartphone. In particular, step 120 can be partially executed on the PC, limitedly to the entry of the user personal identification data, while the entry of the other user identification data automatically acquired through the smartphone operating system (such as IMEI code, SSAID code and ICCID code of the SIM, PIN) can be executed on the smartphone. Alternatively, step 120 can be entirely executed on the PC, and in this case the user identification data automatically acquired through the smartphone operating system can be transmitted from the smartphone to the PC.

Once the registration and association have been carried out, in a second step 310, the sender user *M* opens the auxiliary app on the PC that generates an identification code, advantageously a QRCODE, that is displayed on (at least) one PC screen.

Then, in a third step 320, the sender user *M* opens the app on the smartphone and makes it acquire the identification code, advantageously a QRCODE, displayed on said (at least one) PC screen, and the smartphone and the PC establish a connection on a secure encrypted communication channel through which smartphone and PC communicate with each other ensuring the security of the information exchanged.

Subsequently, in a fourth step 330, the sender user *M* selects, through the auxiliary app, one or more recipient users *Dᵢ* of his/her community with whom such payload is to be shared.

Then, in a fifth step 340, the sender user *M* selects, through the auxiliary app, at least one digital content, e.g. one or more files, present on his/her PC, wherein said at least one digital content forms the so-called payload of the transmission, to be shared with said one or more recipient users *Dᵢ* and transmits it to the smartphone that executed its encoding and generates the encrypted file 430 by executing the steps 210, 220, 230 and 240 illustrated with reference to Figure 2, and the encrypted file 430 is sent from the smartphone to the PC .

Subsequently, in a sixth step 350, the sender user *M* selects the application, among those available on the PC, with which the encrypted file 430 is to be sent to said one or more recipient users *Dᵢ*. The transmission can also take place in a block chain manner.

Then, in a seventh step 360, the auxiliary app requires the sender user *M* for carrying out a biometric recognition to authorise the sending (possibly through the app installed in the smartphone). Other embodiments of the computer implemented method according to the invention may not have such seventh step 360.

Finally, in an eighth step 370, the app that is on the smartphone (or other portable device or PC or server) of each one of said one or more recipient users *Dᵢ* performs some processing activities on the encrypted file 430 received from the application that the sender user *M* has selected to send the encrypted file 430, as illustrated for step 270 shown in Figure 2.

The digital content exchange system configured to execute the computer implemented method according to the invention comprises a plurality of devices provided with processing units, such as for instance portable devices (such as smartphones, tablets and laptops), PCs and servers, each one of them is configured to execute the computer implemented method of exchanging digital contents according to the invention, for the steps of both sending and receiving the digital contents. Optionally, the system can include at least one central processing device, optionally at least one server (optionally accessible in the cloud) and/or at least one PC, that is accessible, possibly also via web, by a system administrator, and that records information related to the associations among users and one or more logs of events related to the transmissions of digital contents, but not necessarily the same non-encrypted digital contents, in compliance with the privacy and current legislation.

The preferred embodiments of this invention have been described and a number of variations have been suggested hereinbefore, but it should be understood that those skilled in the art can make other variations and changes without so departing from the scope of protection thereof, as defined by the attached claims.

## Claims

1. Computer implemented method of exchanging digital contents among a plurality of users registered in a sharing association, wherein each user of said sharing association is associated to at least one device provided with one or more processing units and with one or more acquiring devices configured to acquire at least one biometric trait, wherein the computer implemented method comprises the following steps:
A. said at least one device of each user of said sharing association, associates and stores: a personal univocal code of the user under consideration generated by said at least one device of the user under consideration, wherein said personal univocal code of the user under consideration depends on one or more biometric features of identification of the user under consideration deriving from at least one biometric trait of the user under consideration acquired by said one or more acquiring devices, and a public key and a private key of a asymmetric cryptography algorithm corresponding to the user under consideration, wherein the public keys of all the users of said sharing association are accessible by or stored in said at least one device of each user of said sharing association;
B. on at least one device of a sender user *M* of said sharing association, selecting (200) at least one digital content (400) that forms a transmission payload and further selecting one or more recipient users *Dᵢ* of said sharing association with whom to share said transmission payload;
C. said at least one device of the sender user *M* encrypts (210) said at least one digital content (400) using as a cryptographic key said personal univocal code of the sender user *M,* obtaining an encrypted payload (405);
D. said at least one device of the sender user *M,* for each one of said one or more recipient users *Dᵢ*, encodes (220) said personal univocal code of the sender user *M* through said asymmetric cryptography algorithm by means of said public key of the recipient user *Dᵢ*, obtaining a respective encoded personal univocal code (410) of the sender user *M;*
E. said at least one device of the sender user *M* builds (230, 240) an encrypted file (430) comprising the encrypted payload (405) and a matrix binary file (420), that includes said encoded personal univocal code (410) of the sender user *M* for each one of said one or more recipient users *Dᵢ*;
F. said at least one device of the sender user *M* sends (250, 260) the encrypted file (430) to said at least one device of each one of said one or more recipient users *Dᵢ*; and
G. said at least one device of each one of said one or more recipient users *Dᵢ* receives the encrypted file (430),
a) decodes said encoded personal univocal code (410) of the sender user *M* through said asymmetric cryptography algorithm by means of said private key of the recipient user *Dᵢ*, and
b) decrypts the encrypted payload (405) using as a cryptographic key said personal univocal code of the sender user *M,* obtaining said at least one digital content (400).

2. Computer implemented method according to claim 1, wherein said personal univocal code of each user of said sharing association further depends on one or more user's identification personal data, optionally selected from the group comprising name, surname, email, fiscal code, VAT number, IMEI code, SSAID code and SIM ICCID code, and/or on a PIN code.

3. Computer implemented method according to claim 1 or 2, wherein said at least one biometric trait is selected from the group comprising a fingerprint, a face image, a voice print, an image of an iris, a three-dimensional shape of a hand, and an image of a retina.

4. Computer implemented method according to any one of the preceding claims, wherein, in step F, said at least one device of the sender user *M* sends the encrypted file (430) to said at least one device of each one of said one or more recipient users *Dᵢ* by means of an intermediate storage of the encrypted file (430) on at least one storage server, thereby said at least one device of a sender user *M* stores the encrypted file (430) on said at least one storage server and said at least one device of each one of said one or more recipient users *Dᵢ* accesses said at least one storage server and downloads the encrypted file (430).

5. Computer implemented method according to any one of the preceding claims, wherein, in step F, sending the encrypted file (430) is conditioned on a biometric recognition of the sender user *M.*

6. Computer implemented method according to any one of the preceding claims, wherein said at least one device is selected from the group comprising a smartphone, a tablet, a laptop, and a PC.

7. Computer implemented method according to any one of the preceding claims, wherein, in step A, a respective asymmetric cryptography algorithm accessible from or stored in said at least one device of each user of said sharing association is associated to each user of said sharing association.

8. Computer implemented method according to any one of the preceding claims, wherein said at least one device of the sender user *M* on which step B selects said at least one digital content (400) is a first device of the sender user *M,* optionally a PC, provided with a display, and said at least one device of the sender user M on which steps C, D, E, and F are executed is a second device of the sender user *M,* optionally a smartphone, provided with a camera, wherein the computer implemented method further comprises, before step B, the following step:
H. displaying an identification code on said display of said first device of the sender user *M,* optionally a QRCODE, and acquiring said identification code through said camera of said second device of the sender user *M* to establish a connection on an encrypted communication channel between said first device of the sender user *M* and said second device of the sender user M,
wherein, in step B, said at least one digital content (400) is transmitted from said first device of the sender user M to said second device of the sender user *M.*

9. System of digital contents exchange configured to exchange digital contents among a plurality of users registered in a sharing association, wherein each user of said sharing association is associated to at least one device provided with one or more processing units and with one or more acquiring devices configured to acquire at least one biometric trait, wherein said at least one device of each user of said sharing association is configured to execute the computer implemented method of exchanging digital contents among a plurality of users registered in a sharing association according to any one of claims 1 to 8.

10. System according to claim 9, further comprising at least one central processing device, optionally comprising or consisting in at least one server and/or at least one PC and/or at least one portable device, that is accessible, optionally via web, by a system administrator, and that records information related to one or more sharing associations of users and one or more logs of events related to transmissions of digital contents among users of a sharing association.

11. System according to claim 9 or 10, further comprising at least one storage server, wherein said at least one device of each user of said sharing association is configured to execute the computer implemented method of exchanging digital contents among a plurality of users registered in a sharing association according to claim 4.

12. Set of one or more computer programs comprising instructions that, when executed by one or more processing units of a user's device, cause said user's device to execute the computer implemented method of exchanging digital contents among a plurality of users registered in a sharing association according to any one of claims 1 to 8.

13. Set of one or more computer-readable media having stored thereon the set of one or more computer programs according to claim 12.

## Patentansprüche

1. Computerimplementiertes Verfahren zum Austausch digitaler Inhalte zwischen einer Mehrzahl von Nutzern, die in einer Nutzergemeinschaft registriert sind, wobei jeder Nutzer der Nutzergemeinschaft mindestens einem Gerät zugeordnet ist, das mit einer oder mehreren Verarbeitungseinheiten und mit einem oder mehreren Erfassungsgeräten versehen ist, die dazu ausgebildet sind, mindestens ein biometrisches Merkmal zu erfassen, wobei das computerimplementierte Verfahren die folgenden Schritte umfasst:
A. auf dem mindestens einen Gerät jedes Nutzers der Nutzergemeinschaft ordnet das Gerät zu und speichert: einen persönlichen eindeutigen Code des jeweiligen Nutzers, der von dem mindestens einen Gerät des jeweiligen Nutzers erzeugt wird, wobei der persönliche eindeutige Code des jeweiligen Nutzers von einem oder mehreren biometrischen Identifizierungsmerkmalen des jeweiligen Nutzers abhängt, die aus mindestens einem biometrischen Merkmal des jeweiligen Nutzers abgeleitet sind, das von dem einen oder den mehreren Erfassungsgeräten erfasst wird, sowie einen öffentlichen Schlüssel und einen privaten Schlüssel eines asymmetrischen Kryptografie-Algorithmus, die dem jeweiligen Nutzer entsprechen, wobei die öffentlichen Schlüssel aller Nutzer der Nutzergemeinschaft durch das mindestens eine Gerät jedes Nutzers der Nutzergemeinschaft zugänglich sind oder in diesem gespeichert sind;
B. auf mindestens einem Gerät eines Absender-Nutzers M der Nutzergemeinschaft Auswählen (200) mindestens eines digitalen Inhalts (400), der eine Übertragungsnutzlast bildet, und ferner Auswählen eines oder mehrerer Empfänger-Nutzer Dᵢ der Nutzergemeinschaft, mit denen die Übertragungsnutzlast geteilt werden soll;
C. das mindestens eine Gerät des Absender-Nutzers M verschlüsselt (210) den mindestens einen digitalen Inhalt (400) unter Verwendung des persönlichen eindeutigen Codes des Absender-Nutzers M als kryptografischen Schlüssel, wodurch eine verschlüsselte Nutzlast (405) erhalten wird;
D. das mindestens eine Gerät des Absender-Nutzers M codiert (220) für jeden des einen oder der mehreren Empfänger-Nutzer Dᵢ den persönlichen eindeutigen Code des Absender-Nutzers M mittels des asymmetrischen Kryptografie-Algorithmus anhand des öffentlichen Schlüssels des Empfänger-Nutzers Dᵢ, wodurch ein jeweiliger codierter persönlicher eindeutiger Code (410) des Absender-Nutzers M erhalten wird;
E. das mindestens eine Gerät des Absender-Nutzers M erstellt (230, 240) eine verschlüsselten Datei (430), umfassend die verschlüsselte Nutzlast (405) und eine Matrix-Binärdatei (420), die den codierten persönlichen eindeutigen Code (410) des Absender-Nutzers M für jeden des einen oder der mehreren Empfänger-Nutzer Dᵢ enthält;
F. das mindestens eine Gerät des Absender-Nutzers M sendet (250, 260) die verschlüsselte Datei (430) an das mindestens eine Gerät jedes des einen oder der mehreren Empfänger-Nutzer Dᵢ; und
G. das mindestens eine Gerät jedes des einen oder der mehreren Empfänger-Nutzer Dᵢ empfängt die verschlüsselte Datei (430),
a) decodiert den codierten persönlichen eindeutigen Code (410) des Absender-Nutzers M mittels des asymmetrischen Kryptografie-Algorithmus anhand des privaten Schlüssels des Empfänger-Nutzers Dᵢ, und
b) entschlüsselt die verschlüsselte Nutzlast (405) unter Verwendung des persönlichen eindeutigen Codes des Absender-Nutzers M als kryptografischen Schlüssel, wodurch der mindestens eine digitale Inhalt (400) erhalten wird.

2. Computerimplementiertes Verfahren nach Anspruch 1, wobei der persönliche eindeutige Code jedes Nutzers der Nutzergemeinschaft ferner von einem oder mehreren persönlichen Identifikationsdaten des Nutzers abhängt, die gegebenenfalls aus der Gruppe ausgewählt sind, die Name, Nachname, E-Mail-Adresse, Steuernummer, USt-IdNr., IMEI-Code, SSAID-Code und SIM-ICCID-Code und/oder einen PIN-Code umfasst.

3. Computerimplementiertes Verfahren nach Anspruch 1 oder 2, wobei das mindestens eine biometrische Merkmal aus der Gruppe ausgewählt ist, die einen Fingerabdruck, ein Gesichtsbild, ein Stimmprofil, ein Bild einer Iris, eine dreidimensionale Form einer Hand und ein Bild einer Retina umfasst.

4. Computerimplementiertes Verfahren nach einem der vorstehenden Ansprüche, wobei in Schritt F das mindestens eine Gerät des Absender-Nutzers M die verschlüsselte Datei (430) an das mindestens eine Gerät jedes des einen oder der mehreren Empfänger-Nutzer Dᵢ mittels einer Zwischenspeicherung der verschlüsselten Datei (430) auf mindestens einem Speicherserver sendet, wodurch das mindestens eine Gerät eines Absender-Nutzers M die verschlüsselte Datei (430) auf dem mindestens einen Speicherserver speichert und das mindestens eine Gerät jedes des einen oder der mehreren Empfänger-Nutzer Dᵢ auf den mindestens einen Speicherserver zugreift und die verschlüsselte Datei (430) herunterlädt.

5. Computerimplementiertes Verfahren nach einem der vorstehenden Ansprüche, wobei in Schritt F das Senden der verschlüsselten Datei (430) von einer biometrischen Erkennung des Absender-Nutzers M abhängig ist.

6. Computerimplementiertes Verfahren nach einem der vorstehenden Ansprüche, wobei das mindestens eine Gerät aus der Gruppe ausgewählt ist, die ein Smartphone, ein Tablet, einen Laptop und einen PC umfasst.

7. Computerimplementiertes Verfahren nach einem der vorstehenden Ansprüche, wobei in Schritt A jedem Nutzer der Nutzergemeinschaft ein jeweiliger asymmetrischer Kryptografie-Algorithmus zugeordnet ist, der von dem mindestens einen Gerät jedes Nutzers der Nutzergemeinschaft zugänglich ist oder in diesem gespeichert ist.

8. Computerimplementiertes Verfahren nach einem der vorstehenden Ansprüche, wobei das mindestens eine Gerät des Absender-Nutzers M, auf dem in Schritt B der mindestens eine digitale Inhalt (400) ausgewählt wird, ein erstes Gerät des Absender-Nutzers M ist, gegebenenfalls ein PC, das mit einer Anzeige versehen ist, und das mindestens eine Gerät des Absender-Nutzers M, auf dem die Schritte C, D, E und F ausgeführt werden, ein zweites Gerät des Absender-Nutzers M ist, gegebenenfalls ein Smartphone, das mit einer Kamera versehen ist, wobei das computerimplementierte Verfahren ferner, vor Schritt B, den folgenden Schritt umfasst:
H. Anzeigen eines Identifikationscodes auf der Anzeige des ersten Geräts des Absender-Nutzers M, gegebenenfalls eines QR-Codes, und Erfassen des Identifikationscodes durch die Kamera des zweiten Geräts des Absender-Nutzers M, um eine Verbindung über einen verschlüsselten Kommunikationskanal zwischen dem ersten Gerät des Absender-Nutzers M und dem zweiten Gerät des Absender-Nutzers M herzustellen,
wobei in Schritt B der mindestens eine digitale Inhalt (400) von dem ersten Gerät des Absender-Nutzers M an das zweite Gerät des Absender-Nutzers M übertragen wird.

9. System zum Austausch digitaler Inhalte, das dazu ausgebildet ist, digitale Inhalte zwischen einer Mehrzahl von Nutzern auszutauschen, die in einer Nutzergemeinschaft registriert sind, wobei jeder Nutzer der Nutzergemeinschaft mindestens einem Gerät zugeordnet ist, das mit einer oder mehreren Verarbeitungseinheiten und mit einem oder mehreren Erfassungsgeräten versehen ist, die dazu ausgebildet sind, mindestens ein biometrisches Merkmal zu erfassen, wobei das mindestens eine Gerät jedes Nutzers der Nutzergemeinschaft eingerichtet ist, das computerimplementierte Verfahren zum Austausch digitaler Inhalte zwischen einer Mehrzahl von Nutzern, die in einer Nutzergemeinschaft registriert sind, nach einem der Ansprüche 1 bis 8 auszuführen.

10. System nach Anspruch 9, das ferner mindestens eine zentrale Verarbeitungseinrichtung umfasst, die gegebenenfalls mindestens einen Server und/oder mindestens einen PC und/oder mindestens ein tragbares Gerät umfasst oder aus diesem/diesen besteht, die gegebenenfalls über das Web für einen Systemadministrator zugänglich ist und die Informationen zu einer oder mehreren Nutzergemeinschaften von Nutzern und ein oder mehrere Ereignisprotokolle zu Übertragungen digitaler Inhalte zwischen Nutzern einer Nutzergemeinschaft erfasst.

11. System nach Anspruch 9 oder 10, das ferner mindestens einen Speicherserver umfasst, wobei das mindestens eine Gerät jedes Nutzers der Nutzergemeinschaft dazu eingerichtet ist, das computerimplementierte Verfahren zum Austausch digitaler Inhalte zwischen einer Mehrzahl von Nutzern, die in einer Nutzergemeinschaft registriert sind, nach Anspruch 4 auszuführen.

12. Satz aus einem oder mehreren Computerprogrammen, umfassend Anweisungen, die bei Ausführung durch eine oder mehrere Verarbeitungseinheiten eines Geräts eines Nutzers bewirken, dass das Gerät des Nutzers das computerimplementierte Verfahren zum Austausch digitaler Inhalte zwischen einer Mehrzahl von Nutzern, die in einer Nutzergemeinschaft registriert sind, nach einem der Ansprüche 1 bis 8 ausführt.

13. Satz aus einem oder mehreren computerlesbaren Medien, auf denen der Satz aus einem oder mehreren Computerprogrammen nach Anspruch 12 gespeichert ist.

## Revendications

1. Procédé mis en œuvre par ordinateur d'échange de contenus numériques entre une pluralité d'utilisateurs enregistrés dans une association de partage, dans lequel chaque utilisateur de ladite association de partage est associé à au moins un dispositif pourvu d'une ou plusieurs unités de traitement et d'un ou plusieurs dispositifs d'acquisition configurés pour acquérir au moins un trait biométrique, où le procédé mis en œuvre par ordinateur comprend les étapes suivantes :
A. ledit au moins un dispositif de chaque utilisateur de ladite association de partage associe et stocke : un code personnel univoque de l'utilisateur considéré, généré par ledit au moins un dispositif de l'utilisateur considéré, où ledit code personnel univoque de l'utilisateur considéré dépend d'une ou plusieurs caractéristiques biométriques d'identification de l'utilisateur considéré dérivées d'au moins un trait biométrique de l'utilisateur considéré acquis par ledit ou lesdits plusieurs dispositifs d'acquisition, ainsi qu'une clé publique et une clé privée d'un algorithme de cryptographie asymétrique correspondant à l'utilisateur considéré, où les clés publiques de tous les utilisateurs de ladite association de partage sont accessibles par, ou stockées dans, ledit au moins un dispositif de chaque utilisateur de ladite association de partage ;
B. sur au moins un dispositif d'un utilisateur émetteur *M* de ladite association de partage, la sélection (200) d'au moins un contenu numérique (400) qui forme une charge utile de transmission et la sélection en outre d'un ou plusieurs utilisateurs destinataires *Dᵢ* de ladite association de partage avec lesquels partager ladite charge utile de transmission ;
C. ledit au moins un dispositif de l'utilisateur émetteur *M* chiffre (210) ledit au moins un contenu numérique (400) en utilisant comme clé cryptographique ledit code personnel univoque de l'utilisateur émetteur *M*, obtenant ainsi une charge utile chiffrée (405) ;
D. ledit au moins un dispositif de l'utilisateur émetteur *M*, pour chacun dudit ou desdits plusieurs utilisateurs destinataires *Dᵢ*, code (220) ledit code personnel univoque de l'utilisateur émetteur *M* par l'intermédiaire dudit algorithme de cryptographie asymétrique au moyen de ladite clé publique de l'utilisateur destinataire *Dᵢ*, obtenant ainsi un code personnel univoque encodé respectif (410) de l'utilisateur émetteur *M* ;
E. ledit au moins un dispositif de l'utilisateur émetteur *M* construit (230, 240) un fichier chiffré (430) comprenant la charge utile chiffrée (405) et un fichier binaire matriciel (420), qui inclut ledit code personnel univoque encodé (410) de l'utilisateur émetteur *M* pour chacun dudit ou desdits plusieurs utilisateurs destinataires *Dᵢ* ;
F. ledit au moins un dispositif de l'utilisateur émetteur *M* envoie (250, 260) le fichier chiffré (430) audit au moins un dispositif de chacun dudit ou desdits plusieurs utilisateurs destinataires *Dᵢ* ; et
G. ledit au moins un dispositif de chacun dudit ou desdits plusieurs utilisateurs destinataires *Dᵢ* reçoit le fichier chiffré (430),
a) décode ledit code personnel univoque encodé (410) de l'utilisateur émetteur *M* par l'intermédiaire dudit algorithme de cryptographie asymétrique au moyen de ladite clé privée de l'utilisateur destinataire *Dᵢ*, et
b) déchiffre la charge utile chiffrée (405) en utilisant comme clé cryptographique ledit code personnel univoque de l'utilisateur émetteur *M*, obtenant ainsi ledit au moins un contenu numérique (400).

2. Procédé mis en œuvre par ordinateur selon la revendication 1, dans lequel ledit code personnel univoque de chaque utilisateur de ladite association de partage dépend en outre d'une ou plusieurs données personnelles d'identification de l'utilisateur, choisies éventuellement dans le groupe comprenant le prénom, le nom, l'adresse électronique, le code fiscal, le numéro de TVA, le code IMEI, le code SSAID et le code ICCID de la carte SIM, et/ou d'un code PIN.

3. Procédé mis en œuvre par ordinateur selon la revendication 1 ou 2, dans lequel ledit au moins un trait biométrique est choisi dans le groupe comprenant une empreinte digitale, une image faciale, une empreinte vocale, une image de l'iris, une forme tridimensionnelle de la main et une image de la rétine.

4. Procédé mis en œuvre par ordinateur selon l'une quelconque des revendications précédentes, dans lequel, à l'étape F, ledit au moins un dispositif de l'utilisateur émetteur *M* envoie le fichier chiffré (430) audit au moins un dispositif de chacun dudit ou desdits plusieurs utilisateurs destinataires *Dᵢ*, au moyen d'un stockage intermédiaire du fichier chiffré (430) sur au moins un serveur de stockage, de sorte que ledit au moins un dispositif d'un utilisateur émetteur *M* stocke le fichier chiffré (430) sur ledit au moins un serveur de stockage et que ledit au moins un dispositif de chacun dudit ou desdits plusieurs utilisateurs destinataires *Dᵢ* accède audit au moins un serveur de stockage et télécharge le fichier chiffré (430).

5. Procédé mis en œuvre par ordinateur selon l'une quelconque des revendications précédentes, dans lequel, à l'étape F, l'envoi du fichier chiffré (430) est subordonné à une reconnaissance biométrique de l'utilisateur émetteur *M*.

6. Procédé mis en œuvre par ordinateur selon l'une quelconque des revendications précédentes, dans lequel ledit au moins un dispositif est choisi dans le groupe comprenant un téléphone intelligent, une tablette, un ordinateur portable et un PC.

7. Procédé mis en œuvre par ordinateur selon l'une quelconque des revendications précédentes, dans lequel, à l'étape A, un algorithme de cryptographie asymétrique respectif accessible depuis, ou stocké dans, ledit au moins un dispositif de chaque utilisateur de ladite association de partage est associé à chaque utilisateur de ladite association de partage.

8. Procédé mis en œuvre par ordinateur selon l'une quelconque des revendications précédentes, dans lequel ledit au moins un dispositif de l'utilisateur émetteur *M* sur lequel l'étape B sélectionne ledit au moins un contenu numérique (400) est un premier dispositif de l'utilisateur émetteur *M*, éventuellement un PC, pourvu d'un écran, et ledit au moins un dispositif de l'utilisateur émetteur *M* sur lequel les étapes C, D, E et F sont exécutées est un deuxième dispositif de l'utilisateur émetteur *M*, éventuellement un téléphone intelligent, pourvu d'une caméra, dans lequel le procédé mis en œuvre par ordinateur comprend en outre, avant l'étape B, l'étape suivante :
H. l'affichage d'un code d'identification sur ledit écran dudit premier dispositif de l'utilisateur émetteur M, éventuellement un QRCODE, et l'acquisition dudit code d'identification par l'intermédiaire de ladite caméra dudit deuxième dispositif de l'utilisateur émetteur M afin d'établir une connexion sur un canal de communication chiffré entre ledit premier dispositif de l'utilisateur émetteur M et ledit deuxième dispositif de l'utilisateur émetteur M,
dans lequel, à l'étape B, ledit au moins un contenu numérique (400) est transmis depuis ledit premier dispositif de l'utilisateur émetteur *M* vers ledit deuxième dispositif de l'utilisateur émetteur *M*.

9. Système d'échange de contenus numériques configuré pour échanger des contenus numériques entre une pluralité d'utilisateurs enregistrés dans une association de partage, dans lequel chaque utilisateur de ladite association de partage est associé à au moins un dispositif pourvu d'une ou plusieurs unités de traitement et d'un ou plusieurs dispositifs d'acquisition configurés pour acquérir au moins un trait biométrique, dans lequel ledit au moins un dispositif de chaque utilisateur de ladite association de partage est configuré pour exécuter le procédé mis en œuvre par ordinateur d'échange de contenus numériques entre une pluralité d'utilisateurs enregistrés dans une association de partage selon l'une quelconque des revendications 1 à 8.

10. Système selon la revendication 9, comprenant en outre au moins un dispositif de traitement central, éventuellement comprenant ou consistant en au moins un serveur et/ou au moins un PC et/ou au moins un dispositif portable, qui est accessible, éventuellement via le Web, par un administrateur système, et qui enregistre des informations relatives à une ou plusieurs associations de partage d'utilisateurs et un ou plusieurs journaux d'événements relatifs aux transmissions de contenus numériques entre les utilisateurs d'une association de partage.

11. Système selon la revendication 9 ou 10, comprenant en outre au moins un serveur de stockage, dans lequel ledit au moins un dispositif de chaque utilisateur de ladite association de partage est configuré pour exécuter le procédé mis en œuvre par ordinateur d'échange de contenus numériques entre une pluralité d'utilisateurs enregistrés dans une association de partage selon la revendication 4.

12. Ensemble d'un ou plusieurs programmes informatiques comprenant des instructions qui, lorsqu'elles sont exécutées par une ou plusieurs unités de traitement d'un dispositif d'un utilisateur, amènent ledit dispositif de l'utilisateur à exécuter le procédé mis en œuvre par ordinateur d'échange de contenus numériques entre une pluralité d'utilisateurs enregistrés dans une association de partage selon l'une quelconque des revendications 1 à 8.

13. Ensemble d'un ou plusieurs supports lisibles par ordinateur sur lesquels est stocké l'ensemble d'un ou plusieurs programmes informatiques selon la revendication 12.
